Europäisches Patentamt

European Patent Office

Office européen des brevets

(19)

(11) Veröffentlichungsnummer: **0 246 253 B1**

# EUROPÄISCHE PATENTSCHRIFT

(12)

(45) Veröffentlichungstag der Patentschrift: **15.01.92**

(51) Int. Cl.⁵: **G03B 23/02**

(21) Anmeldenummer: **86906326.3**

(22) Anmeldetag: **29.10.86**

(86) Internationale Anmeldenummer:
**PCT/EP86/00623**

(87) Internationale Veröffentlichungsnummer:
**WO 87/03106 (21.05.87 87/11)**

(54) **BEHÄLTER ZUR AUFNAHME EINES BILDERSTAPELS.**

(30) Priorität: **06.11.85 DE 3539297**

(43) Veröffentlichungstag der Anmeldung:
**25.11.87 Patentblatt 87/48**

(45) Bekanntmachung des Hinweises auf die
Patenterteilung:
**15.01.92 Patentblatt 92/03**

(84) Benannte Vertragsstaaten:
**AT BE CH DE FR GB IT LI NL SE**

(56) Entgegenhaltungen:
**EP-A- 113 057**
**WO-A-86/03021**

(73) Patentinhaber: **Licinvest AG**
**Hartbertstrasse 9**
**CH-7002 Chur(CH)**

(72) Erfinder: **ACKERET, Peter**
**Allmendstrasse 18**
**CH-8700 Küsnacht(CH)**

(74) Vertreter: **Sparing Röhl Henseler Patentan-**
**wälte European Patent Attorneys**
**Rethelstrasse 123**
**W-4000 Düsseldorf 1(DE)**

**Beschreibung**

Die Erfindung betrifft einen Behälter zur Aufnahme eines Bilderstapels mit einem Gehäuse, das ein Sichtfenster zum Betrachten des obersten Bildes im Stapel aufweist, und mit einem Schieber, der aus dem Gehäuse parallel zur vom Fenster definierten Ebene herausziehbar ist. Wenn ein solcher Behälter als Bildwechsler ausgebildet ist, wie beispielsweise in den US-Patentschriften 4238898, 4238899, 4241528, 4241529, 4245417, 4259802 und 4376348 beschrieben, so wird der Bilderstapel zyklisch umgeschichtet, wenn man den Schieber herauszieht und wieder einschiebt. Die für diese Funktion notwendigen Bauteile, die sogenannte Wechselmechanik, benötigt im Behälter einen gewissen Platz, und zwar insbesondere vor und hinter dem Stapel in Richtung der Bewegung des Schiebers gesehen. Damit diese Teile bei eingeschobenem Schieber, wenn also z.B. der Behälter als Aufstell- oder Hängerahmen verwendet wird, nicht durch das Fenster sichtbar sind, liegen die betreffenden Kanten des Fensters im wesentlichen kongruent zu dem sichtbaren Bild, das heißt im Abstand von den zu ihnen parallelen Gehäusekanten. Und damit der Behälter trotzdem ansprechend aussieht, sieht man einen entsprechenden Abstand auch zwischen den zu den genannten Kanten senkrechten Fensterkanten und den zu ihnen parallelen Gehäusekanten vor. Auf diese Weise ist das Fenster passepartoutartig von Außenflächenbereichen des Gehäuses umgeben.

Solche Behälter sind primär für Fotoabzüge gedacht. Die meistgebrauchten Formate von Fotoabzügen sind jedoch im Verhältnis zum Platzbedarf der Wechselmechanik relativ klein, so daß die das Fenster umgebenden passepartoutartigen Gehäusebereiche unproportioniert breit erscheinen. Aufgabe der Erfindung ist es, einen auch als Bildwechsler geeigneten Behälter zu schaffen, bei dem die Breite der Passepartoutbereiche bei gegebenen Außenabmessungen der Behälterkontur innerhalb weiter Grenzen frei wählbar ist.

Diese Aufgabe wird durch die im Patentanspruch 1 angegebenen Merkmale gelöst; die Unteransprüche definieren bevorzugte und/oder zweckdienliche Weiterbildungen dieses Konzepts.

Die Erfindung wird nachstehend anhand des in den beigefügten Abbildungen dargestellten Ausführungsbeispiels näher erläutert.

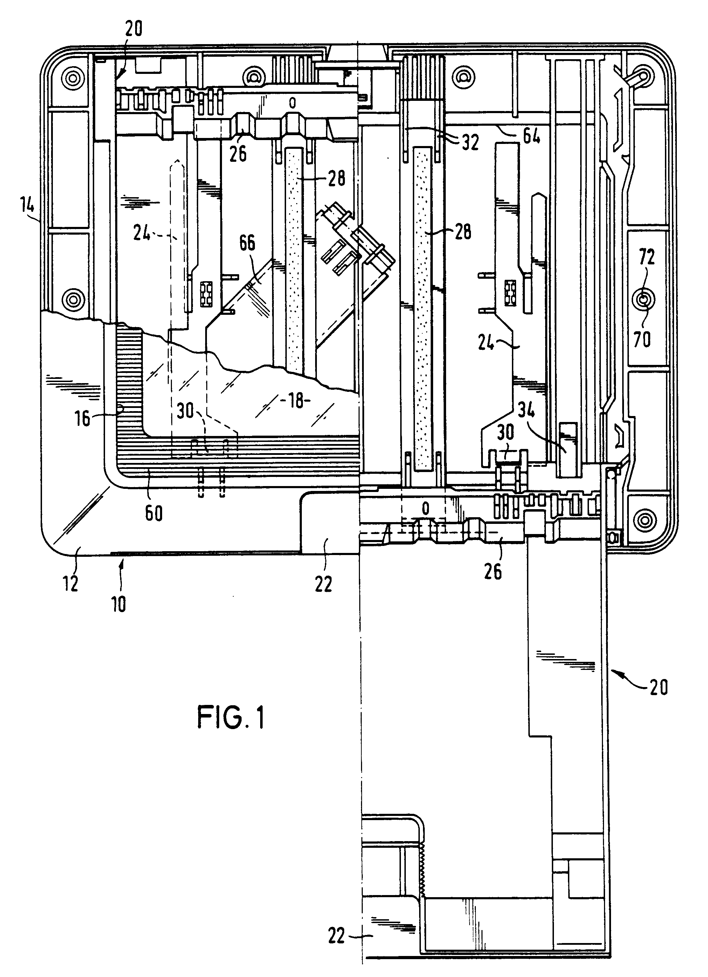

Fig. 1 zeigt in Draufsicht, teilweise aufgeschnitten und teilweise mit ausgezogenem Schieber einen als Bildwechsler ausgebildeten Behälter.

Fig. 2 zeigt ausschnittweise und teilweise im Schnitt eine Oberschale für den Behälter von Fig. 1 in Seitenansicht.

Fig. 3 zeigt ausschnittweise und im Schnitt eine Ecke der Oberschale von Fig. 2 senkrecht zu der Ansicht von Fig. 2.

Fig. 4 und 5 zeigen analog zu Fig. 3 eine alternative Ausführungsform.

Der dargestellte Bildwechsler besitzt ein Gehäuse 10 bestehend aus einer Oberschale 12 und einer Unterschale 14, die wie dargestellt durch Verschrauben oder aber durch Verschweißen, Schnappeinrichtungen o.dgl. miteinander verbunden sind. Die Oberschale 12 besitzt einen im wesentlichen rechteckigen oder quadratischen Ausschnitt 16 für ein Fenster 18, das passepartoutartig von der Oberschale 12 umgeben ist.

Das Gehäuse 10 nimmt einen Schieber 20 auf, der mit einem Griff 22 versehen und in dem Gehäuses 10 verschiebbar geführt ist, zu welchem Zweck der Schieber 20 am Griff 22, der bei eingeschobenem Schieber 20 von entsprechenden Ausnehmungen in der Ober- und Unterschale 12, 14 aufgenommen wird, erfaßt werden kann. Der Schieber 20 nimmt einen Bilderstapel auf, der bei eingeschobenem Schieber 20 mittels Federn 24 in Richtung auf das Fenster 18 gedrückt wird.

Ferner ist eine Trenneinrichtung vorgesehen, die dazu dient, ein Einzelbild von dem Bilderstapel zu trennen. Die Trenneinrichtung umfaßt einen Separator 26, der am Schieber 20 an der dem Griff 22 gegenüberliegenden Seite befestigt ist.

Eine Halteeinrichtung ist vorgesehen, die das von dem Bilderstapel durch die Trenneinrichtung beim Herausziehen des Schiebers 20 aus dem Gehäuse 10 vereinzelte Bild in dem Gehäuse 10 zurückhält, während der Reststapel mit dem Schieber 20 aus dem Gehäuse 10 herausgezogen wird. Die Halteeinrichtung umfaßt einen Haftbelag 28 an der dem Fenster 18 zugewandten Innenseite des Gehäuses 10.

Eine Zufuhreinrichtung dient dazu, der Trenneinrichtung Bilder zuzuführen. Sie umfaßt Haken 30 an den dem Griff 22 zugewandten Seiten der Federn 24. Die Haken 30 dienen dazu, die Bilder des Bilderstapels beim Wechselvorgang gegen den Separator 26 gestaffelt zu drücken und das letzte Bild des Bilderstapels in einem Spalt zwischen Separator 26 und Haftbelag 28 zu halten, wobei der Separator 26 während des Beginns des Wechselvorgangs zunächst über eine Schanze 32 läuft, gegen die das letzte Bild gedrückt wird, so daß der Separator 26 dieses letzte Bild überfahren kann.

Das beim Wechselvorgang im Gehäuse 10 verbliebene letzte Bild des Bilderstapels wird durch eine Leiteinrichtung, umfassend die Federn 24 sowie weitere Hochhebefedern 34, beim Auszug des Schiebers 20 fortschreitend in Richtung des Fensters 18 angehoben, so daß es beim Wiedereinschub des Schiebers 20 auf die andere Seite des Bilderstapels gelangt.

Die Einzelheiten des Wechselmechnismus und des -vorganges werden nicht im einzelnen beschrieben, da es im Rahmen der vorliegenden Erfindung hierauf nicht ankommt und entsprechendes außerdem aus den eingangs aufgeführten Patentschriften bekannt ist.

Das Fenster 18 besitzt an einer Seite mehrere mit Abstand zueinander angeordnete, zur Fensteraußenfläche 36 vertieft angeordnete Vorsprünge 38, wobei an der Fensterinnenfläche 40 im Bereich der Vorsprünge 38 Ausschnitte 42 vorgesehen sind, die zur Seite hin durch die Vorsprünge 38 und gegenüberliegend durch eine Schulter 44 begrenzt sind. Die Unterseiten der Vorsprünge 38 sind in Bezug auf die Fensterinnenfläche 40 etwas zur Fensteraußenfläche 36 hin versetzt.

An wenigstens der gegenüberliegenden und vorzugsweise an allen drei verbleibenden Seiten besitzt das Fenster 18 ebenfalls Ausschnitte 42, die ebenfalls durch eine Schulter 44 begrenzt sind, jedoch befinden sich an diesen Seiten anstelle von Vorsprüngen 38 vorstehende, widerhakenartige Schnappnasen 46. Das Fenster 18 besitzt eine Kontur korrespondierend zu dem Ausschnitt 16 der Oberschale 12, wobei die Vorsprünge 38 und die Schnappnasen 46 gegenüber dieser Kontur nach außen vorstehen.

Die Oberschale 12 besitzt in der Bewegungsrichtung des Schiebers 20 verlaufende Rippen 48 benachbart zu den quer zur Bewegungsrichtung des Schiebers 20 verlaufenden Kanten des Fensters 18, wobei sich die Rippen 48 bis zu einer vorbestimmten Länge einwärts in Richtung zum Fenster 18 und abwärts in Richtung zum Inneren des Gehäuses 10 erstrecken. Die Rippen 48 sind oberseitig auf jeder Seite des Fensters 18 durch einen Steg 50 miteinander verbunden, wobei zwischen dem Steg 50 und dem benachbarten, den Ausschnitt 16 begrenzenden Teil der Oberschale 12 Öffnungen 52 entsprechend den Vorsprüngen 38 und Schnappnasen 46 des Fensters 18 angeordnet sind.

An den beiden verbleibenden, gegenüberliegenden Seiten des Ausschnitts 16 besitzt die Oberschale 12 Stege 54 mit jeweils einer sich einwärts um die Länge der Rippen 48 erstreckende, durchgehende Längsrippe 56 an der Innenseite der Stege 54. Im Bereich der Schnappnasen 46 sind auch hier Öffnungen 52 vorgesehen. Die Rippen 48 und die Längsrippen 56 dienen zum Abstützen des obersten Bildes im Bilderstapel. Die Längsrippen 56 reichen tiefer als die Oberkanten des Schiebers 20, damit keine Bilder seitlich nach außen über den Schieber 20 entweichen können. Der Separator 26 - oder, falls keine Wechselfunktion vorgesehen ist, die Rückwand des Schiebers 20 - reicht höher als die Rippen 48 und besitzt dementsprechende Ausschnitte, so daß der Separator 26 die Rippen 48 passieren kann.

Das Fenster 18 wird mit den Vorsprüngen 38 in die hierfür vorgesehenen Öffnungen 52 eingesetzt, wonach die Schnappnasen 46 durch Eindrücken des Fensters 18 unter der Oberschale 12 im Bereich der zugehörigen Öffnungen 52 eingeschnappt werden. Hierbei sind die Ausschnitte 42 derart bemessen, daß im eingeschnappten Zustand zwischen den Unterseiten der Ausschnitte 42 und der Oberseite der Stege 50, 54 genügend Spiel 58 bleibt, so daß der Einschnappvorgang ausgeführt werden kann. Ansonsten liegt das Fenster 18 auf den Stegen 50, 54 auf, die das Fenster 18 daher im Bereich der Außenkanten unterseitig abstützen, wobei sich die Schultern 44 der Ausschnitte 42 an die benachbarten Kanten der Stege 50, 54 legen.

In dem Bereich, in dem sich die Stege 50, 54 befinden, ist das Fenster 18 mit einer umlaufenden Mattierung 60 versehen, der passepartoutartig das eigentliche Sichtfenster umgibt und ein zweites Passepartout darstellt. Die Mattierung 60 kann auch gehäuseseitig auf den Stegen 50, 54 vorgesehen sein.

Die Oberschale 12 ist benachbart zum Ausschnitt 16 mit einer nach innen zum Fenster 18 gerichteten Abschrägung 62 versehen, der ein entsprechender flächiger Vorsprung 64 an der Unterseite der Unterschale 14 entspricht, so daß die Behälter leicht gestapelt werden können, wobei der unterseitige Vorsprung bei gestapelten Behältern nicht bis zum Fenster 18 des darunter befindlichen Behälters reicht und dieses daher nicht verkratzen kann. In dem unterseitigen Vorsprung 64 befindet sich eine Vertiefung zur Aufnahme eines Ständers 66, der an der Unterschale 14 ausklappbar angelenkt ist.

Die Stege 50, 54 bzw. die Mattierung 60 dienen gleichzeitig dazu, darunter liegende Teile zu verdecken. Der durch die Stege 50, 54 bzw. die Mattierung 60 gebildete Ausschnitt entspricht im wesentlichen dem kleinsten Bild der mit Toleranzen behafteten Bilder des Bilderstapels. Bei Fotoabzügen bestehen die größten Toleranzen an den Schnittkanten (etwa ± 0,5 cm), da die Fotoabzüge von einer Rolle abgeschnitten werden, die in ihrer Breite geringere Toleranzen - auch von Rolle zu Rolle - aufweist. Bei dem dargestellten Ausführungsbeispiel treten die größeren Toleranzen quer zur Auszugsrichtung des Schiebers 20 auf, so daß der Schieber 20 entsprechend breit sein muß, um auch die größten Fotoabzüge aufnehmen zu können. Mit Hilfe von Zentrierungsmitteln werden die Fotoabzüge bezüglich des Fensters 18 zentriert.

Das Gehäuse 10, der Schieber 20 und das Fenster 18 sind Kunststoffspritzteile. Die Oberschale 12 besitzt im Randbereich zur Unterschale 14 gerichtete Hülsen 68, während die Unterschale 14 entsprechende hiermit ausgerichtete Hülsen 70 aufweist, die zur Unterseite des Behälters hin offen sind. In die Hülsen 70 werden von der Unterseite her Schrauben 72 eingeführt, die mit einem selbstschneidenden Gewinde in die Hülsen 68 der Oberschale 12 eingeschraubt werden. Hierdurch werden Ober- und Unterschale 12, 14 ohne Verschweißen miteinander im Bereich eines an drei Seiten des Behälters befindlichen Hohlraums zwischen Ober- und Unterschale 12, 14 in bevorzugter Weise verbunden.

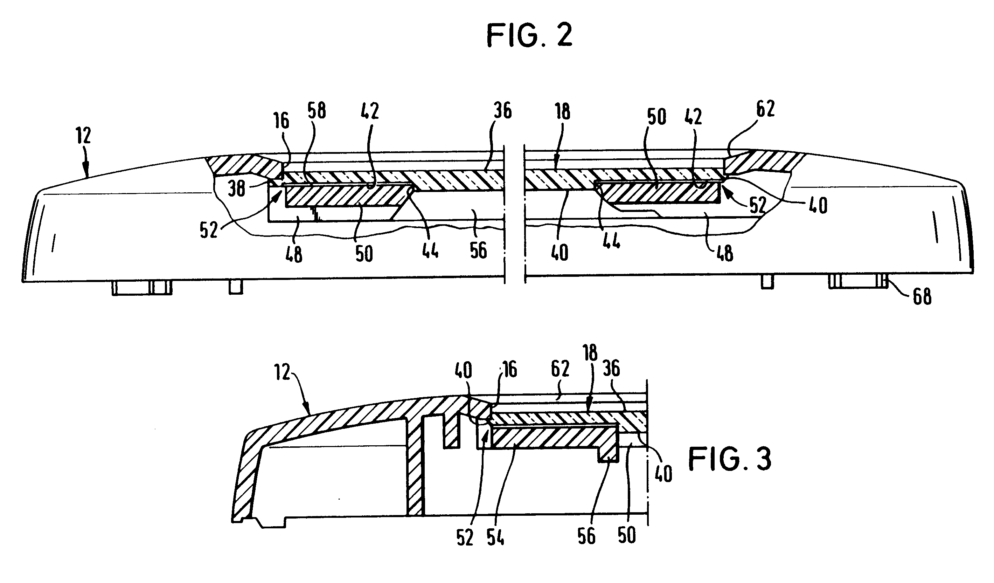

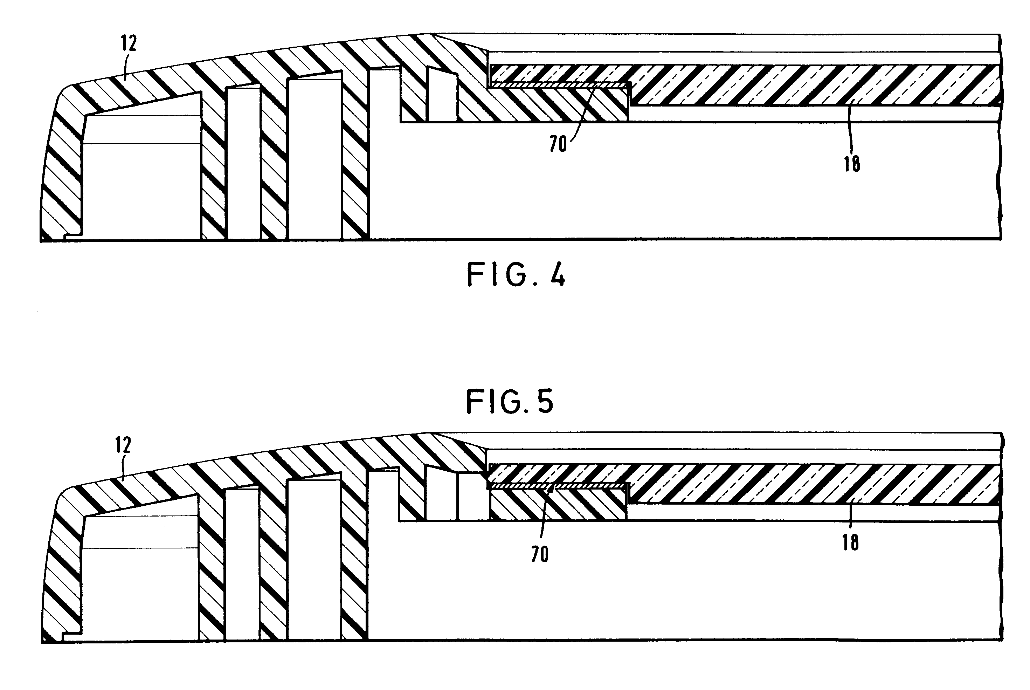

Fig. 4 und 5 zeigen in zwei verschiedenen Schnittebenen und gegenüber Fig. 3 vergrößert eine Ausführungsform, bei der zwischen Fenster 18 und Gehäuseoberschale 12 eine rahmenförmige Ziermaske 70 eingelegt ist. Fig. 4 ist ein Schnitt im verankerungsfreien Bereich des Fensterelements, während Fig. 5 der Fig. 3 entspricht. Die Ziermaske 70 kann aus opakem Material, etwa farbig bedrucktem Papier, bestehen, oder aber aus einer transparenten Folie mit Zierornamenten.

**Patentansprüche**

1. Behälter für einen Stapel im wesentlichen rechteckiger Bilder, mit einem Gehäuse, das in einer Breitseite einen Fensterausschnitt zum Exponieren des unter ihm liegenden Bildes aufweist, mit einem parallel zum Fensterausschnitt aus dem Gehäuse herausziehbaren und wiedereinschiebbaren Schieber, wobei Zentrierelemente vorgesehen sind, die zumindest das unter dem Fensterausschnitt liegende Bild bezüglich des Ausschnitts ausrichten, sowie mit einer in die Breitseite eingesetzten transparenten Scheibe, die größer ist als der Fensterausschnitt, wobei die Breitseite eine Einsenkung aufweist, in die die Scheibe von außen eingesetzt und gegen den Behälterinnenraum auf Stützelementen abgestützt ist, die sich von der Kontur der Einsenkung aus in Richtung Fensterausschnitt unter die Scheibe erstrecken, und wobei Mittel zum Maskieren des Gehäuseinnenraums zwischen dem Fensterausschnitt und der Kontur der Einsenkung vorgesehen sind, die die Zentriermittel überdecken.

2. Behälter nach Anspruch 1, bei dem die Einsenkung von Flächenabschnitten begrenzt ist, die sich im wesentlichen senkrecht zur Ebene der Scheibe erstrecken.

3. Behälter nach Anspruch 1 oder 2, bei dem die Scheibe durch eine Schnappverbindung an den die Einsenkung begrenzenden Flächenabschnitten gehalten ist.

4. Behälter nach einem der vorangehenden Ansprüche, bei dem eine Maske zwischen der Scheibe und den Stützelementen eingelegt ist.

5. Behälter nach Anspruch 4, bei dem die Außenkontur der Maske kongruent mit der Einsenkung ist und deren Innenkontur den Fensterausschnitt definiert.

6. Behälter nach einem der vorangehenden Ansprüche, dadurch gekennzeichnet, daß die Scheibe eine die Größe des Fensterausschnitts an zwei einander gegenüberliegenden Kanten übersteigende Abmessung aufweist.

7. Behälter nach Anspruch 6, dadurch gekennzeichnet, daß die Scheibe an allen vier Kanten größer ist als der Fensterausschnitt.

8. Behälter nach Anspruch 1, dadurch gekennzeichnet, daß die Scheibe aus transparentem Kunststoff besteht und ihre dem Behälterinneren zugekehrte Seite im Bereich zwischen der Kontur der Einsenkung und dem Fensterausschnitt eine die Transparenz verhindernde Oberflächenstruktur aufweist.

9. Behälter nach Anspruch 1, dadurch gekennzeichnet, daß die Stützelemente opak sind und den Fensterausschnitt begrenzen.

10. Behälter nach Anspruch 1, dadurch gekennzeichnet, daß ein Randbereich der Scheibe auf ihrer dem Behälterinneren zugekehrten Seite opak bedruckt ist.

11. Behälter nach einem der vorangehenden Ansprüche, dadurch gekennzeichnet, daß die Kontur der Einsenkung von der Außenkontur der Breitseite allseits im wesentlichen gleichen Abstand aufweist.

12. Behälter nach Anspruch 11, dadurch gekennzeichnet, daß der Übergang von der Kontur der Einsenkung zu den umgebenden Flächen der Breitseite abgestuft ist.

13. Behälter nach Anspruch 3, gekennzeichnet durch Anschläge zum Positionieren der Maske und der Scheibe.

14. Behälter nach Anspruch 4, gekennzeichnet durch eine Maske aus opakem Material.

15. Behälter nach Anspruch 4, gekennzeichnet durch eine Maske aus transparentem Material mit Zierornamenten.

16. Behälter nach Anspruch 2 oder 3, dadurch gekennzeichnet, daß die Stützelemente als Fortsätze der Flächenabschnitte ausgebildet sind.

**17.** Behälter nach Anspruch 2 oder 16, dadurch gekennzeichnet, daß Stützelemente für zumindest zwei einander gegenüberliegende Kanten der Scheibe vorgesehen sind.

**18.** Behälter nach Anspruch 17, dadurch gekennzeichnet, daß die Stützelemente durchgehende Flächen bilden.

**19.** Behälter nach Anspruch 17 oder 18, dadurch gekennzeichnet, daß die Stützelemente eine geschlossene rahmenförmige Fläche bilden.

**20.** Behälter nach Anspruch 3, gekennzeichnet durch Schnappverbindungen an zwei einander gegenüberliegenden Kanten der Scheibe.

**21.** Behälter nach Anspruch 20, dadurch gekennzeichnet, daß Schnappverbindungen zumindest nahe der Mitte der beiden Kanten vorgesehen sind.

**22.** Behälter nach Anspruch 3, dadurch gekennzeichnet, daß die Flächenabschnitte Öffnungen aufweisen, in die an die Scheibe angeformte Nasen eingeschnappt sind.

**23.** Behälter nach Anspruch 22, dadurch gekennzeichnet, daß die Öffnungen als Löcher in den Flächenabschnitten ausgebildet sind.

**24.** Behälter nach Anspruch 22 oder 23, dadurch gekennzeichnet, daß die Nasen keilförmig sind.

**25.** Behälter nach einem der vorangehenden Ansprüche, dadurch gekennzeichnet, daß die Scheibe einen dickeren Bereich in der Größe des Fensterausschnitts und einen dünneren Bereich, der auf den Stützelementen abgestützt ist, aufweist.

**26.** Behälter nach Anspruch 1, dadurch gekennzeichnet, daß die Zentriermittel sich in der Auszugsrichtung des Schiebers erstrecken.

**27.** Behälter nach Anspruch 26, gekennzeichnet durch rippenförmige Zentriermittel.

**28.** Behälter nach Anspruch 1, dadurch gekennzeichnet, daß die Zentriermittel mehrere Rippen nahe mindestens einer quer zu der Bewegungsrichtung des Schiebers verlaufenden Kante des Fensterausschnitts umfassen.

**29.** Behälter nach Anspruch 1, gekennzeichnet durch an die Stützelemente angeformte Zentriermittel.

**30.** Behälter nach Anspruch 1, gekennzeichnet durch am Schieber vorgesehene Zentriermittel.

**31.** Behälter nach Anspruch 30, dadurch gekennzeichnet, daß der Schieber sich parallel zu seiner Bewegungsrichtung erstreckende Wandungen als Zentriermittel aufweist.

**32.** Behälter nach Anspruch 30 oder 31, dadurch gekennzeichnet, daß der Schieber ein Griffstück aufweist, das eine als Zentriermittel dienende Kante quer zur Bewegungsrichtung aufweist.

**33.** Behälter nach einem der Ansprüche 30 bis 32, dadurch gekennzeichnet, daß der Schieber einen quer zur Bewegungsrichtung verlaufenden Separatorsteg mit einer Zentrierfläche aufweist.

**34.** Behälter nach Anspruch 1, gekennzeichnet durch einen an die Breitseite innen angeformten Anschlag als Zentriermittel.

**35.** Behälter nach Anspruch 34, dadurch gekennzeichnet, daß der Anschlag stufenförmig ist und sich quer zur Auszugsrichtung des Schiebers erstreckt.

**36.** Behälter nach Anspruch 5, dadurch gekennzeichnet, daß die Maske und die Stützelemente gleiche Kontur aufweisen.

**37.** Behälter nach einem der vorangehenden Ansprüche, bei dem die Scheibe zumindest im an die Stützelemente angrenzenden Bereich innerhalb des Fensterausschnitts einen Vorsprung aufweist, der tiefer in das Gehäuse ragt als die Stützelemente im Randbereich des Fensterausschnitts.

**38.** Behälter nach Anspruch 37, bei dem der Vorsprung die Größe des Fensterausschnitts aufweist.

**39.** Behälter nach Anspruch 37 oder 38, bei dem die Innenseite der Scheibe im Bereich des Vorsprungs im wesentlichen eben ist.

**40.** Behälter nach Anspruch 25 oder 37, bei dem die Außenseite der Scheibe im wesentlichen eben ist.

**41.** Behälter nach Anspruch 40, bei dem der Vorsprung die Größe des Fensterausschnitts aufweist.

**42.** Behälter nach Anspruch 40 oder 41, bei dem die Innenseite der Scheibe im Bereich des Vorsprungs im wesentlichen eben ist.

43. Behälter nach Anspruch 28 oder 40, bei dem die Außenseite der Scheibe im wesentlichen eben ist.

44. Behälter nach einem der vorangehenden Ansprüche, dadurch gekennzeichnet, daß der Behälter mit einer Wechselmechanik versehen ist, die beim Auseinanderziehen von Gehäuse und Schieber ein Bild an einem Stapelende abnimmt und beim Wiederzusammenschieben am andern Stapelende wieder zufügt.

**Claims**

1. Container for a pile of substantially rectangular pictures, having a housing with a window cut-out in one broad face for displaying the picture lying under the window cut-out, a slider member that can be pulled out of the housing and pushed back into the housing again parallel to the window cut-out, centering means being provided which align at least the picture lying under the window cut-out with respect to the cut-out, and a transparent pane, inserted in the broad face, that is larger than the window cut-out, the broad face having a recessed portion into which the pane is inserted from the outside and is supported against the inside of the container on support elements that extend under the pane from the outline of the recessed portion in the direction towards the window cut-out, and there being provided between the window cut-out and the outline of the recessed portion means for masking the inside of the housing that cover the centering means.

2. Container according to claim 1 in which the recessed portion is defined by surface portions that extend substantially perpendicular to the plane of the pane.

3. Container according to claim 1 or claim 2, in which the pane is held by a snap-connection against the surface portions defining the recessed portion.

4. Container according to any one of the preceding claims, in which a mask is inserted between the pane and the support elements.

5. Container according to claim 4, in which the peripheral outline of the mask is congruent with the recessed portion and its inner outline defines the window cut-out.

6. Container according to any one of the preceding claims, characterised in that the size of the pane exceeds the size of the window cut-out at two opposing edges.

7. Container according to claim 6, characterised in that the pane is larger at all four edges than is the window cut-out.

8. Container according to claim 1, characterised in that the pane consists of transparent plastics material and the side thereof facing the inside of the container has in the region between the outline of the recessed portion and the window cut-out a surface structure that prevents transparency.

9. Container according to claim 1, characterised in that the support elements are opaque and define the window cut-out.

10. Container according to claim 1, characterised in that one edge region of the pane is printed to make it opaque on the side thereof facing the inside of the container.

11. Container according to any one of the preceding claims, characterised in that the outline of the recessed portion is at a substantially uniform distance on all sides from the peripheral outline of the broad face.

12. Container according to claim 11, characterised in that the change from the outline of the recessed portion to the surrounding surfaces of the broad face is gradual.

13. Container according to claim 3, characterised by stop members for positioning the mask and the pane.

14. Container according to claim 4, characterised by a mask made of opaque material.

15. Container according to claim 4, characterised by a mask made of transparent material with decorative ornamentation.

16. Container according to claim 2 or claim 3, characterised in that the support elements are in the form of continuations of the surface portions.

17. Container according to claim 2 or claim 16, characterised in that support elements are provided for at least two opposing edges of the pane.

18. Container according to claim 17, characterised in that the support elements form continuous surfaces.

19. Container according to claim 17 or claim 18, characterised in that the support elements form a closed, frame-like surface.

20. Container according to claim 3, characterised by snap-connections on two opposing edges of the pane.

21. Container according to claim 20, characterised in that snap-connections are provided at least near the middle of the two edges.

22. Container according to claim 3, characterised in that the surface portions have openings into which lugs moulded onto the pane are snapped.

23. Container according to claim 22, characterised in that the openings are in the form of holes in the surface portions.

24. Container according to claim 22 or claim 23, characterised in that the lugs are wedge-shaped.

25. Container according to any one of the preceding claims, characterised in that the pane has a relatively thick region the size of the window cut-out and a relatively thin region that is supported by the support elements.

26. Container according to claim 1, characterised in that the centering means extend in the withdrawal direction of the slider member.

27. Container according to claim 26, characterised by rib-like centering means.

28. Container according to claim 1, characterised in that the centering means comprise a plurality of ribs near at least one edge of the window cut-out extending transversely to the direction of movement of the slider member.

29. Container according to claim 1, characterised by centering means moulded onto the support elements.

30. Container according to claim 1, characterised by centering means provided on the slider member.

31. Container according to claim 30, characterised in that the slider member has as centering means wall portions extending parallel to its direction of movement.

32. Container according to claim 30 or claim 31, characterised in that the slider member has a grip member that has an edge, transverse to the direction of movement, serving as centering means.

33. Container according to any one of claims 30 to 32, characterised in that the slider member has a separator bar extending transversely to the direction of movement and having a centering surface.

34. Container according to claim 1, characterised by a stop member moulded onto the inside of the broad face as centering means.

35. Container according to claim 34, characterised in that the stop member is step-like and extends transversely to the withdrawal direction of the slider member.

36. Container according to claim 5, characterised in that the mask and the support elements have the same outline.

37. Container according to any one of the preceding claims, in which the pane has, at least in the region adjacent to the support elements inside the window cut-out, a projection that projects deeper into the housing than do the support elements in the edge region of the window cut-out.

38. Container according to claim 37, in which the projection is the size of the window cut-out.

39. Container according to claim 37 or claim 38, in which the inner face of the pane is substantially flat in the region of the projection.

40. Container according to claim 25 or claim 37, in which the outer face of the pane is substantially flat.

41. Container according to claim 40, in which the projection is the size of the window cut-out.

42. Container according to claim 40 or claim 41, in which the inner face of the pane is substantially flat in the region of the projection.

43. Container according to claim 28 or claim 40, in which the outer face of the pane is substantially flat.

44. Container according to any one of the preceding claims, characterised in that the container is provided with a change mechanism that takes a picture from one end of the pile when the housing and the slider member are pulled apart and returns it to the other end of the pile when they are pushed together again.

## Revendications

1. Logement destiné à recevoir une pile d'images sensiblement rectangulaires, comportant un boîtier, qui présente, dans un côté large, une découpe en forme de fenêtre permettant d'exposer l'image située au-dessous de cette dernière, un tiroir pouvant être retiré hors du boîtier parallèlement à la découpe formant fenêtre et pouvant y être réinséré, et dans lequel il est prévu des éléments de centrage qui alignent au moins l'image située au-dessous de la découpe formant fenêtre par rapport à cette découpe, ainsi qu'une plaque transparente insérée dans le côté large et qui a des dimensions supérieures à la découpe formant fenêtre, le côté large comportant un renfoncement dans lequel la plaque peut être insérée de l'extérieur et prendre appui contre l'espace intérieur du logement, sur des éléments de support, qui s'étendent à partir du contour du renfoncement, au-dessous de la plaque, en direction de la découpe formant fenêtre, et des moyens pour masquer l'espace intérieur du boîtier et recouvrant les moyens de centrage étant prévus entre la découpe formant fenêtre et le contour du renfoncement.

2. Logement selon la revendication 1, dans lequel le renfoncement est limité par des éléments de surface, qui s'étendent sensiblement perpendiculairement au plan de la plaque.

3. Logement selon la revendication 1 ou 2, dans lequel la plaque est maintenue au moyen d'une liaison par encliquetage aux éléments de surface délimitant le renfoncement.

4. Logement selon l'une des revendications précédentes, dans lequel un masque est inséré entre la plaque et les éléments de support.

5. Logement selon la revendication 4, dans lequel le contour extérieur du masque est congruent avec le renfoncement et dont le contour intérieur définit la découpe formant fenêtre.

6. Logement selon l'une des revendications précédentes, caractérisé en ce que la plaque possède des dimensions qui sont supérieures aux dimensions de la découpe formant fenêtre, au niveau de deux bords opposés.

7. Logement selon la revendication 6, caractérisé en ce que la plaque possède, au niveau de ses quatre bords, des dimensions supérieures à celles de la découpe formant fenêtre.

8. Logement selon la revendication 1, caractérisé en ce que la plaque est formée d'une matière synthétique transparente et que sa face tournée vers l'intérieur du logement présente, dans la zone située entre le contour du renfoncement et la section formant fenêtre, une structure superficielle empêchant la transparence.

9. Logement selon la revendication 1, caractérisé en se que les éléments de support sont opaques et limitent la découpe formant fenêtre.

10. Logement selon la revendication 1, caractérisé en ce qu'une zone marginale de la plaque est recouverte d'une impression opaque, sur sa face tournée vers l'intérieur du logement.

11. Logement selon l'une des revendications précédentes, caractérisé en ce que le contour du renfoncement est de tous côtés sensiblement à la même distance du contour extérieur du côté large.

12. Logement selon la revendication 11, caractérisé en ce que la jonction entre le contour du renfoncement et les surfaces enveloppantes du côté large est échelonnée.

13. Logement selon la revendication 3, caractérisé par des butées servant à positionner le masque et la plaque.

14. Logement selon la revendication 4, caractérisé par un masque réalisé en un matériau opaque.

15. Logement selon la revendication 4, caractérisé par un masque réalisé en un matériau transparent et portant des motifs décoratifs.

16. Logement selon la revendication 2 ou 3, caractérisé en ce que les éléments de support sont réalisés sous la forme de prolongements des éléments de surface.

17. Logement selon la revendication 2 ou 16, caractérisé en ce que des éléments de support sont prévus pour au moins deux bords réciproquement opposés de la plaque.

18. Logement selon la revendication 17, caractérisé en ce que les éléments de support forment des surfaces continues.

19. Logement selon la revendication 17 ou 18, caractérisé en ce que les éléments de support forment une surface fermée en tant que cadre.

20. Logement selon la revendication 3, caractérisé par des liaisons à encliquetage sur deux côtés réciproquement opposés de la plaque.

21. Logement selon la revendication 20, caractérisé en ce que des liaisons à encliquetage sont prévues au moins à proximité du milieu des deux bords.

22. Logement selon la revendication 3, caractérisé en ce que les éléments de surface présentent des ouvertures, dans lesquelles s'engagent par encliquetage des ergots formés sur la plaque.

23. Logement selon la revendication 22, caractérisé en ce que les ouvertures sont réalisées sous la forme de trous ménagés dans les éléments de surface.

24. Logement selon la revendication 22 ou 23, caractérisé en ce que les ergots possèdent une forme en coin.

25. Logement selon l'une des revendications précédentes, caractérisé en ce que la plaque possède une partie épaissie possédant les dimensions de la découpe formant fenêtre, et une zone amincie, qui prend appui sur les éléments de support.

26. Logement selon la revendication 1, caractérisé en ce que les moyens de centrage s'étendent dans la direction de tirage du tiroir.

27. Logement selon la revendication 26, caractérisé par des moyens de centrage en forme de nervures.

28. Logement selon la revendication 1, caractérisé en ce que les moyens de centrage comportent plusieurs nervures à proximité d'au moins un bord de la découpe formant fenêtre, qui s'étend transversalement par rapport à la direction de déplacement du tiroir.

29. Logement selon la revendication 1, caractérisé par des moyens de centrage formés par moulage aux éléments de support.

30. Logement selon la revendication 1, caractérisé par des moyens de centrage prévus sur le tiroir.

31. Logement selon la revendication 30, caractérisé en ce que le tiroir présence, comme moyens de centrage, des parois qui sont parallèles à sa direction de déplacement.

32. Logement selon la revendication 30 ou 31, caractérisé en ce que le tiroir présente un élément de préhension qui présente un bord utilisé comme moyen de centrage et disposé transversalement par rapport à la direction de déplacement.

33. Logement selon l'une des revendications 30 à 32, caractérisé en ce que le tiroir présente une barrette de séparation qui s'étend transversalement par rapport à la direction de déplacement et possède une surface de centrage.

34. Logement selon la revendication 1, caractérisé par une butée formée par moulage intérieurement au côté large, en tant que moyens de centrage.

35. Logement selon la revendication 34, caractérisé en ce que la butée possède une forme étagée et s'étend transversalement par rapport à la direction de tirage du tiroir.

36. Logement selon la revendication 5, caractérisé en ce que le masque et les éléments de support présentent un contour identique.

37. Logement selon l'une des revendications précédentes, dans lequel la plaque possède, au moins dans la zone, qui jouxte les éléments de support, à l'intérieur de la découpe formant fenêtre, une partie saillante qui pénètre dans le boîtier plus profondément que les éléments de support dans la zone marginale de la découpe formant fenêtre.

38. Logement selon la revendication 37, dans lequel la partie saillante possède les dimensions de la découpe formant fenêtre.

39. Logement selon la revendication 37 ou 38, dans lequel la face intérieure de la plaque est sensiblement plane dans la région de la partie saillante.

40. Logement selon la revendication 25 ou 37, dans lequel la face extérieure de la plaque est sensiblement plane.

41. Logement selon la revendication 40, dans lequel la partie saillante présente les dimensions de la découpe formant tête.

**42.** Logement selon la revendication 40 ou 41, dans lequel la face intérieure de la plaque est sensiblement plane dans la région de la partie saillante.

**43.** Logement selon la revendication 28 ou 40, dans lequel la face extérieure de la plaque est sensiblement plane.

**44.** Logement selon l'une des revendications précédentes, caractérisé en ce que le logement comporte un système mécanique changeur, qui retire une image à une extrémité d'une pile, lors du déploiement du boîtier du tiroir, et la renvoie à l'autre extrémité de la pile, lors de la réinsertion du tiroir et du boîtier l'un dans l'autre.

FIG.1

FIG. 2

FIG. 3

FIG. 4

FIG. 5

EP 0 246 253 B1